(19) Europäisches Patentamt

European Patent Office

Office européen des brevets

(11) **EP 4 471 665 A1**

(12) **EUROPEAN PATENT APPLICATION**

(43) Date of publication:
**04.12.2024 Bulletin 2024/49**

(21) Application number: **23305871.8**

(22) Date of filing: **01.06.2023**

(51) International Patent Classification (IPC):
**G06N 3/0455** $^{(2023.01)}$    **G06N 3/047** $^{(2023.01)}$
**G06N 3/0475** $^{(2023.01)}$    **G06N 3/088** $^{(2023.01)}$
**G06N 3/084** $^{(2023.01)}$    **G01D 4/00** $^{(2006.01)}$

(52) Cooperative Patent Classification (CPC):
**G06N 3/0455; G06N 3/047; G06N 3/0475;**
**G06N 3/084; G06N 3/088; G06N 3/0985;**
G01D 2204/24

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicants:
- **TOTALENERGIES ONETECH**
  **92400 Courbevoie (FR)**
- **Institut Mines Telecom**
  **91120 Palaiseau (FR)**

(72) Inventors:
- **Oublal, Khalid**
  **Courbevoie (FR)**
- **Benhaiem, David**
  **Courbevoie (FR)**
- **Le Borgne, Emmanuel**
  **Courbevoie (FR)**

(74) Representative: **Bandpay & Greuter**
  **11 rue Christophe Colomb**
  **75008 Paris (FR)**

(54) **ENERGY CONSUMPTION MONITORING**

(57)    The disclosure notably relates to a computer-implemented method of machine-learning for non-intrusive monitoring of energy consumption of households with respect to a plurality of appliance classes. The method comprises obtaining a bidirectional variational auto-encoder architecture for a neural network, and training the neural network. The bidirectional variational auto-encoder architecture includes a temporal attention layer. The neural network is configured to take as an input a signal representing an aggregate electrical load of a household over time, and to output a plurality of signals each representing an electrical load of a respective appliance class over time.

FIG. 1

EP 4 471 665 A1

## Description

### TECHNICAL FIELD

The disclosure relates to the field of computer programs and systems, and more specifically to a method, system, and program for Non-intrusive Loading Monitoring of energy consumption of households.

### BACKGROUND

Reducing energy consumption and Carbon Footprint (CF) is a major environmental challenge in addressing climate change concerns. This challenge requires efforts of individuals and businesses to save energy as well as to improve technologies relevant to energy production and energy consumption. This rising interest to reduce CF through active user contribution has brought new challenges to traditional solutions of energy saving and requires improved analysis methods of household and industrial energy consumption profiles. In this aspect, efficient analysis of the energy consumption of a household and its electrical appliances improves the understating of the actual energy consumption of each appliance at a household. Such an improved understating enables defining energy saving scenarios and coaching services tailored to each customer to shift appliances' consumption to low carbon energy production. Such analysis methods further enable providing detailed feedback on the energy consumption of each of individual appliances to increase the willingness to invest in more energy-efficient products.

A number of systems and programs are offered on the market for such monitoring purposes, for example intrusive methods using smart sensors. However, environmental reasons impede using smart sensors in a big scale to every appliance at each household to monitor the consumption, leaving alone the huge financial cost. On the other hand, non-intrusive monitoring methods such as Hart, "Nonintrusive appliance load monitoring," Proceedings of the IEEE, 80(12):1870-1891, 1922 seek to extract the consumption of individual appliances from an aggregate load curve (i.e., a mixed signal). Existing non-intrusive methods are mainly developed for low-complexity datasets with a very few numbers of appliances and low noise that do not fully describe the real world of use. Furthermore, the appliances and their usage may differ from one country to another country.

Within this context, there is still a need for an improved non-intrusive monitoring of energy consumption of households.

### SUMMARY

It is therefore provided a computer-implemented method of machine-learning for non-intrusive monitoring of energy consumption of households with respect to a plurality of appliance classes. The method comprises obtaining a bidirectional variational auto-encoder (VAE) architecture for a neural network including a temporal attention layer. The neural network is configured to take as an input a signal representing an aggregate electrical load of a household over time, and to output a plurality of signals each representing an electrical load of a respective appliance class over time. The method further comprises training the neural network.

The method may comprise one or more of the following:

- the temporal attention layer is configured define a set of latent variables, the set of latent variables being defined by a conditional probability distribution conditioned on the input signal;
- the method obtains the latent variables by minimizing a Lagrangian, the Lagrangian being of a type

$$\mathcal{L}_{IB}(p_\theta(z \mid X); \beta) = I(X; z) - \beta I(z; Y)$$

where $p_\theta(z \mid X)$ is a generative distribution from the prior distribution $p_\theta(z)$ conditioned on a latent variable $z$, $I(X; z)$ is the mutual information between the input X and the latent variable $z$, $\beta I(z; Y)$ is the mutual information between the latent variable $z$ and the output $Y$, and $\beta$ is a Lagrange multiplier;
- the training comprises minimizing a loss, the loss comprising: a first term representing a reconstruction loss between the input signal and the plurality of outputted signals, a second term representing a likelihood estimation of a set of latent variables, and a third term representing an amount of information shared among a set of latent variables of the neural network;
- the likelihood estimation of the second term includes a disparity between a prior Gaussian distribution and a distribution of the set of latent variables prior distribution;
- the loss is of the form

$$\mathcal{L} = -\frac{\beta}{2} \sum_{i=1}^{L} (1 + \log \sigma_i^2 - \mu_i^2 - \sigma_i^2) + \gamma TC + \delta \mathcal{L}_{\text{rec}}$$

where $\mathcal{L}_{\text{rec}}$ is the first term being of the form,

$$\mathcal{L}_{\text{rec}} = \left( \sum_{m=1}^{M} \| y_m - \hat{y}_m \|^2 \right)$$

*TC* is of the form

$$TC(z) = \text{KL} \left( p(z) \, \| \, \prod_i p(z_i) \right)$$

where p(z) is the joint distribution of the latent variable z, and $\Pi_i\, p(z_i)$ is the product of the marginal distributions of the components of z, and KL denotes a Kullback-Leibler divergence, $\mu_i$ is a mean of the variational autoencoder, $\sigma_i$ is a standard deviation of the variational autoencoder, and $\beta, \gamma, \delta$ are respective weights;

- the loss further comprises an orthogonality loss term enforcing an orthogonality between a first set of latent variables and a second set of latent variables; each of the first set and the second set of latent variables corresponding to a signal of the plurality of signals; and/or
- the orthogonality term ( $\mathcal{L}_{\text{ortho}}$ ) is of the type

$$\mathcal{L}_{\text{ortho}} = \sum_{i=1}^{L} \sum_{j=i+1}^{L} \frac{\langle z_i, z_j \rangle^2}{|z_i|^2 |z_j|^2}$$

where $z_i$ is the first set of latent variable respective to output signal i of the neural network and $z_j$ is the second set of latent variables respective to output signal *j* of the neural network, and *L* is the dimensionality of the latent space, the notation $\langle \cdot, \cdot \rangle$ representing a dot product between two vectors, and $|\cdot|$ representing a Euclidean norm of a vector.

It is further provided a computer-implemented method for non-intrusive monitoring of energy consumption. The method comprises obtaining an aggregated signal representing an electrical load of a plurality of appliances; obtaining a neural network trained according to the method of machine-learning discussed above; and applying the obtained neural network to the aggregated signal thereby obtaining a plurality of signals each representing an electrical load of an appliance of the plurality of appliances.

The method of for non-intrusive monitoring may comprise one or more of the following:

- the obtained signal may be a sequence of powers and may comprise one or more of: an active power load, a reactive power load, and an apparent power load; and/or
- the plurality of appliances comprises any one or any combination of: a washing machine, clothes dryer, oven, stove, refrigerator, dishwasher, and electric vehicle.

In the method of machine-learning or the method for non-intrusive monitoring, the plurality of appliance classes may have more than one class and fewer than 25 classes.

It is further provided a computer program comprising instructions for performing the method of machine-learning, and/or the method for non-intrusive monitoring.

It is further provided a computer readable storage medium having recorded thereon the computer program and/or a trained neural network according to the method of machine-learning.

It is further provided a system comprising a processor coupled to a memory, the memory having recorded thereon the computer program.

## BRIEF DESCRIPTION OF THE DRAWINGS

Non-limiting examples will now be described in reference to the accompanying drawings, where:

- FIG.s 1-2 show general diagrams according to the method;

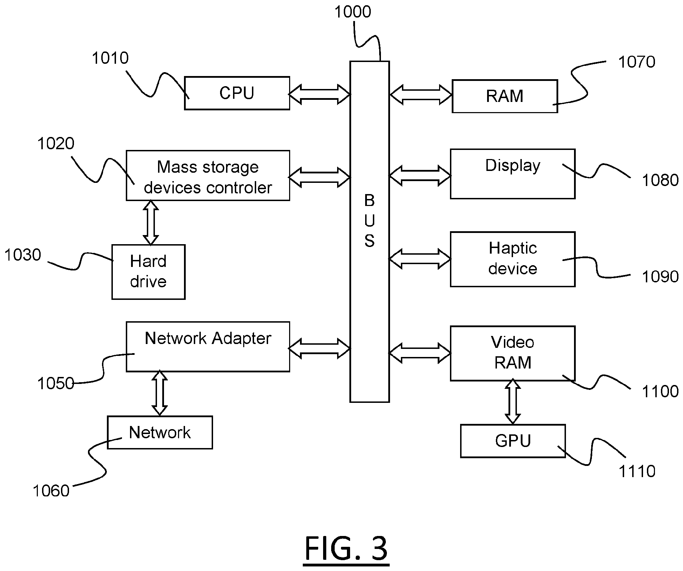

- FIG. 3 shows an example of the system; and
- FIG.s 4-8 present example applications of the method.

## DETAILED DESCRIPTION

It is proposed a computer-implemented method of machine-learning for non-intrusive monitoring of energy consumption of households. The monitoring is with respect to a plurality of appliance classes. The method comprises providing a bidirectional variational auto-encoder (VAE) architecture for a neural network. The provided neural architecture includes a temporal attention layer. The neural network is configured to take as an input a signal representing an aggregate electrical load of a household over time, and to output a plurality of signals each representing an electrical load of a respective appliance class over time; and training the neural network.

Such a method constitutes a solution to monitor energy consumption in a household in a non-intrusive manner by training a neural network configured to disaggregate a (cumulative/aggregate) consumption signal to a plurality of signals for each class of appliances. Such a solution is particularly relevant to monitor electrical energy consumption in households as there a vast variety of electrical appliances in a community of standard households consuming electricity and there exist different brands for each type/class of electrical appliances. The proposed solution is able to identify a respective consumption of each class or type of appliance of a household from a (multivariate) aggregate signal of the electricity consumption of said household over a period of time. The aggregate signal can be easily acquired by a standard consumption meter equipped with data transmission chips. Hence, the method removes the technical, financial, and environmental burden for the traditional solution of installing an individual sensor on each appliance in order to monitor the energy consumption for each appliance.

Notably, the neural network trained by the method is able to disaggregate a signal into a plurality of appliance classes. In this aspect, the method provides a unitary presentation of different households which may be equipped with different brands of an appliance class (e.g., dishwasher). The method may apply to such different households without being inputted (or influenced) by the specific brand and monitor the disaggregate signal for an appliance class. Such a unitary approach makes the method able to be applied to households having multiple units of an appliance class (e.g., multiple fridges). In such cases, the method is able to produce and monitor a disaggregate signal for the whole class signifying the whole consumption by said class (i.e. the aggregate consumption of all fridges in one household, should the household have several fridges instead of only one as most common).

As discussed above, the method may be based on a predetermined set of appliances classes to be monitored. This prevents the method to be biased advantageously or disadvantageously about a brand, and removes the need to know the exact number of appliances per class at a household. Furthermore, as the number of classes of appliances is vastly smaller than the number of appliances in different brands, such a unitary feature of the method improves the training of the neural network by reducing the required size of the training data.

The plurality of appliance classes has more than 1 class (at least 2, for example more than 5 or 10) and/or may have fewer than 25 classes, for example fewer than 15 classes. Such upper bounds allow an accurate training of the neural network. As discussed above, the classes may be predetermined. For example, the plurality of classed may include at least washing machine, fridge, dishwasher, clothes dryer, stove, and oven.

The method trains a neural network which has a bidirectional variational auto-encoder (VAE) architecture. Such an architecture employs bidirectional encoders, for example, in a hierarchical fashion, to process the input signal and to produce a plurality of low-resolution (i.e., low-dimensional) latent variables. Such low-resolutions latent variables are then decoded to produce high-dimensional outputs. Employing a variational auto-encoder architecture (i.e., stochastic encoding and decoding) improves the training and inferring by the trained network as it enables the solution to model uncertainties (i.e., noise) in the input data. It has been found that such uncertainties are often present in household aggregate signals either as a result of measurement noise at the consumption meter or loss of small portions of the input signal resulting from communication issues (between the consumption meter and a computer or chip configured to analyse and/or store the data) during deployment.

The method trains a neural network which includes a temporal attention layer. The attention mechanism, as known in the field of data science, is a part of a neural architecture configured to dynamically highlight (via modification of respective weights of the network) relevant features of the input data. By "temporal" attention it is meant an attention mechanism dedicated to a dynamic time selection mechanism, i.e., a mechanism which dynamically determines (via modification of respective weights of the network) which part of the temporal input signal has higher importance/relevance in training and inferring of the network. Using the temporal attention layer preserves the recurrence of information captured from the input data. In other words, a variational autoencoder equipped with an attention mechanism introduces an additional constraint on the encoder network to ensure that the encoded representation of the data is informative for the downstream task. This constraint is achieved by adding a bottleneck layer to the encoder that forces the encoder to learn a compact representation of the data that is informative for the task at hand, here disaggregate the input signal. Specifically, the neural network architecture is configured to ensure that the encoder learns a representation of the data that preserves the temporal information in the time series. This is achieved by adding a recurrent layer to the encoder that captures the temporal dependencies in the data. Therefore, the method constitutes an improved solution by respecting the temporal dependence of the input. It has indeed been found that household aggregate signals over a period of time can be biased at the end by switching on a certain appliance that consumes a lot, e.g., an oven, or an air conditioner unit. Such a bias can affect the prediction and monitoring if the method is unable to distinguish such appliances and their short time effect. In this specific context, temporal attention layer improves accuracy without much increase in architecture complexity and training costs by capturing the important part of the input signal in monitoring.

In connection with the method of machine learning presented above, it is also provided a computer-implemented method for non-intrusive monitoring of energy consumption. The method of non-intrusive monitoring comprises obtaining an aggregate signal representing an electrical load of a plurality of appliances. The method also obtains a neural network which has been trained (i.e., learnt) according to any example of the method of machine learning discussed hereinbelow. The method of monitoring then applies the obtained neural network to the aggregate signal. As discussed above, the neural network is configured to take as an input a signal representing an aggregate electrical load of a household over time, and to output a plurality of signals each representing an electrical load of a respective appliance class over time. Therefore, and by application of the trained network to the obtained signal, the method of monitoring obtains a plurality of signals each representing an electrical load of a respective appliance class among the plurality of appliance classes.

The method may obtain (i.e., acquire) the aggregate signal (of one household) by a standard consumption meter (e.g., exactly one per household) equipped with one or more data transmission chips. In examples, the method may be applied on a plurality of households on a neighbourhood, a city, a region, or a country where each household is equipped with such consumption meters. The number of households may be larger than 10, 100, 1000, 100000, or 1 million. For example, the method may form or be a part of an energy consumption monitoring process. Such a process may apply the method, at a certain frequency, to the plurality of households. The frequency may be a week, a month, a trimester, or a year. Such a process provides an in-depth analysis of the energy consumption over the plurality of households.

In examples, the obtained signal may be a sequence of powers and may comprise one or more of an active power load, a reactive power load, and an apparent power load. This enables the method to monitor all of active, reactive, and apparent power loads. By a sequence of powers, it is meant a sequence of values where each value represents an instant power. The sequence may be a sequence of vector values where each vector comprises the values of an instant active power load, an instant reactive power load, and/or an instant apparent power load.

In examples, the plurality of appliance classes comprises any one or any combination (e.g., all) of the following classes: a class of washing machines, a class of clothes dryers, a class of ovens, a class of stoves, a class of refrigerators, a class of dishwashers, and a class of electric vehicles. Such examples cover the majority part of the energy consumption in a household.

As discussed above, the neural network is configured to take as an input a signal representing an aggregate electrical load of a household over time, and to output a plurality of signals each representing an electrical load of a respective appliance class over time. In a mathematical formulation, when $x(t) \in \mathbb{R}^c$ is the measured (for example noisy) aggregate power for a household at a given time t, and c is c-channel vector, the total power consumption x(t) (i.e., the input signal to the network) may be decomposed/disaggregate as:

$$x(t) = \sum_{m=1}^{M} y_m(t) + \xi(t)$$

where variable *m* refers to the m-th of *M* appliances. By the c-channel vector it is meant that it defines a signal of c-dimension. The dimension c may be between 1 and 3. The dimension depends on if the input signal to the network includes one or more of the reactive, active, and apparent power loads. The aggregate energy consumption $x(t)$ is the sum of the energy consumption of each appliance $y_m(t)$ with an additional noise $\xi(t)$.

The method of machine-learning may comprise a step of obtaining (i.e., providing) a dataset (known as the training dataset) configured for such a training. Each entry of the obtained dataset may comprise, for each time instant, an aggregate signal and a plurality of signals each representing a ground truth (i.e., a measured value) for an electrical load of an appliance. In examples, for a signal/sequence of length $\tau$, the training set may be of the type

$$D = \{X_{1:\tau}^{(t)}, y_{1:\tau}^{(t)}\}_{t=1}^{N}, X_{1:\tau}^{(t)} = \left\{x_1^{(t)}, \dots, x_\tau^{(t)}\right\} \in \mathbb{R}^{c\times\tau}, y_{1:\tau}^{(t)} \in \mathbb{R}^{M\times\tau},$$

where N denotes the size of the set.

In examples, the sequence $X_{1:\tau}^{(t)}$ presents a set of data points which may be derived from an unknown distribution. A VAE architecture then aims at inferring this distribution with a parametric model $p_\theta(.)$ using a maximum likelihood estimator. Here $z^{(t)} = \{z_i\}_{i=1}^{L}$ is an L-dimensional latent variable representation of a multivariate sequence $X^{(t)}$ and $z_i \in \mathbb{R}^d$, thus capturing the underlying attributes and patterns across the input sequence.

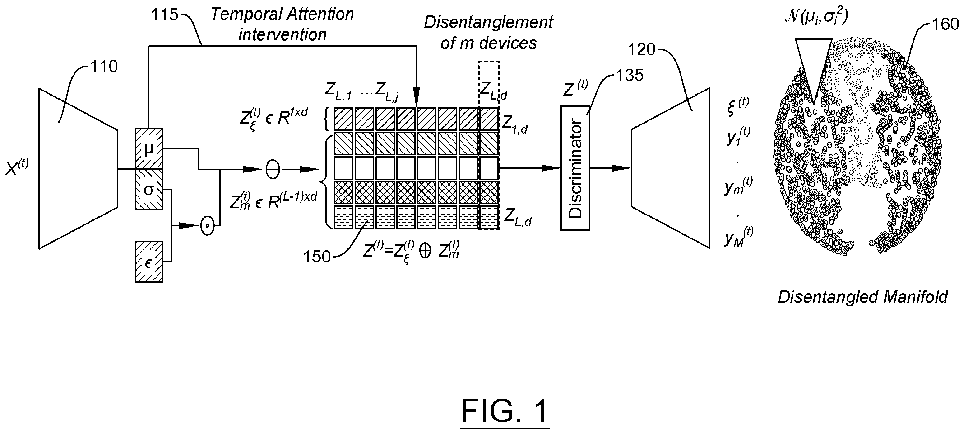

FIG. 1 presents a general diagram of the training method and the architecture of the neural network including the encoder 110 and the decoder 120. When encoding the input $X_{1:\tau}^{(t)}$ to obtain latent variables with a dimension of $L \times d$ ( $L$ refers to the number of appliances to desegregate ($L$ - 1), and one component is for noise as discussed above; d is the size of each component), the network performs sampling according to a normal distribution defined by ($\mu$, $\sigma$). Thereby the method makes a temporal attention intervention 115, and obtains a latent space of size $L \times d$ representing the respective latent variables to a disaggregated signal. The grid 150 shows a respective grid of latent variables for the encoded input over time. The first row of the grid 150 represents the latent variables respectively to the noise. The latent variables are then passed to the decoder 120 via a discriminator 130 to obtain the disentangled manifold 160.

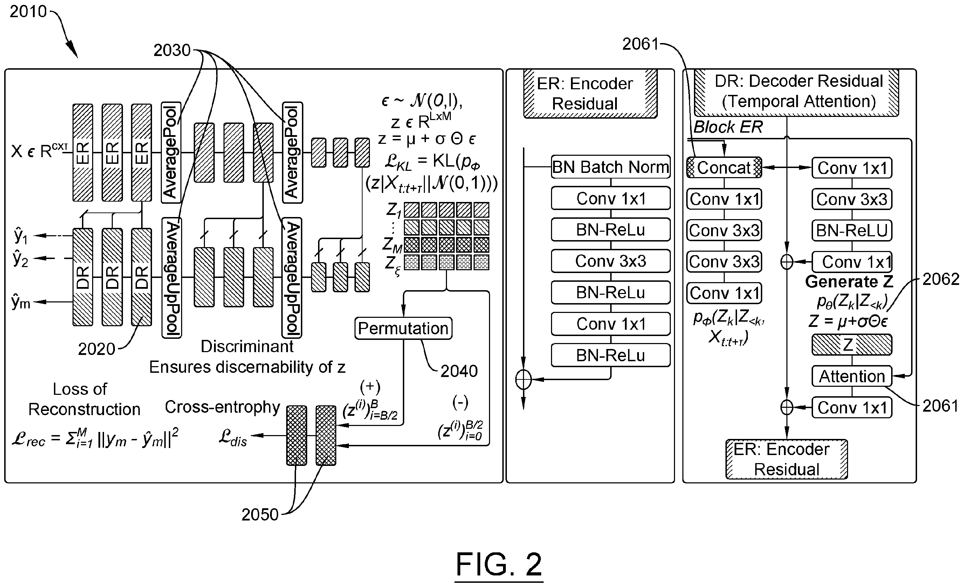

FIG. 2, left, presents a learning process according to the method. Here an ER block 2010 represents an encoder and a DR block 2020 represents a decoder. Each of the blocks 2030 represents an average pool. The method may use any other combination of encoders/decoders and/or average pools. An example of detailed settings for ER/Dr blocks are presented later (see Table 1). Any of the encoders may be a variational encoder, for example, by sampling according to the following normal distribution and by using a Kullback-Leibler (KL) divergence:

$$\epsilon \sim \mathcal{N}(0, \mathbb{I}), z \in \mathbb{R}^{(M+1)L}$$

$$z = \mu + \sigma \odot \epsilon$$

$$\mathcal{L}_{KL} = KL(p_\phi(z|X_{t:t+\tau})||\mathcal{N}(0, \mathbb{I}))$$

Block 2040 presents a permutation while each of blocks 2050 presents a discriminator ensuring the interpretability of the latent variables. FIG. 2, right, presents details of each of ER 2010 and DR 2020 for residual encoders and when 2020 is a residual decoder with a temporal attention. The temporal attention block is presented as 2060. The decoder 2020 includes a concatenation block 2061 and a sampling 2062.

In some examples, the temporal attention layer may be configured to define a set of latent variables, such as a set of latent variables obtained from the input or a set of latent variables to be provided to the encoder. This set of latent variables may be defined by a conditional probability distribution as a function of the input signal. This means that, for example, an input sequence X at time t+1 is treated in the model to be the historical encoding of X at time t-1 for example This can be thought of as a condition on the set of latent variables $z$, such as $p(z|x_t, x_{t+1})$. This enables the method to find a latent variable for a given input that retains the relevant information while discarding the irrelevant information.

The method may obtain said latent variables by minimizing a Lagrangian, hereinafter referred to as Informative Bottleneck (IB) Lagrangian. The IB Lagrangian $\mathcal{L}_{IB}$ may be of the form:

$$\mathcal{L}_{IB}(p_\theta(z \mid X); \beta) = I(X; z) - \beta I(z; Y)$$

where $p_\theta(z \mid X)$ is a generative distribution from the prior distribution $p_\theta(z)$ conditioned on a latent variable $z$, $I(X; z)$ is the mutual information between the input $X$ and the latent variable $z$, $\beta I(z; Y)$ is the mutual information between the latent variable $z$ and the output $Y$, and $\beta$ is a Lagrange multiplier. In other words, the mutual information $I(X; z)$ represents an accuracy of the compression (i.e., encoding) of the input by the latent variables, while $I(z; Y)$ represents an accuracy of the prediction. The Lagrange multiplier $\beta$ enables balancing between said compression and prediction accuracies.

Data processing inequality (DPI) shows that for $x, z,$ and $y$ defining a Markov chain, i.e., if $x \rightarrow z \rightarrow y$ such that $p(y|x, z) = p(y|z)$, $I(x; z) \geq I(x; y)$.holds. In other words, independent of whether $z$ a deterministic or stochastic function of $x$ is, it cannot contain more information about $y$ than $x$ itself. It is also known that minimizing the Lagrangian IB discussed above is equivalent to the following maximization problem:

$$\max_{p_\theta(z|X)} I(X; z) \text{ subject to } TC(z) \leq \gamma$$

where $\gamma$ is a parameter that controls the amount of statistical dependence allowed in the latent variable. The total correlation $TC,$ similarly achieves the same objective as the equation defined above. $TC$ is a measure of the statistical dependence between the components of a probability distribution. The $TC$ quantifies the extent to which the components of the distribution are not statistically independent and is defined as:

$$TC(z) = \text{KL}\left(p(z) \parallel \prod_i p(z_i)\right)$$

where $p(z)$ is the joint distribution of the latent variable $z$, and $\prod_i p(z_i)$ is the product of the marginal distributions of the components of $z$. The $TC$ term can be interpreted as the amount of information that is shared among the components of z. Here, KL denotes a Kullback-Leibler (KL) divergence between its arguments.

In examples, the training comprises minimizing a loss. The method may perform the minimization according to any known method in the field. For example, the method may employ an Adam optimizer. The loss may comprise a first term representing a reconstruction loss between the input signal and the plurality of outputted signals, a second term representing a likelihood estimation of a set of latent variables, and a third term representing an amount of information shared among a set of latent variables of the neural network. The method may further scale each of the first term, the second term and the third term by scaling them using a respective first weight, a respective second weight, and a respective third weight. Such loss terms in combination with such a scaling enable the method to control the quality of prediction.

Optionally, the likelihood estimation of the second term may include a disparity between a prior Gaussian distribution and a distribution of the set of latent variables prior distribution. The prior Gaussian distribution is a distribution imposed by the variational autoencoder. Alternatively, the method may set other probability distributions. In examples where the prior distribution is a Gaussian the method may use a technique called "reparameterization trick". As known in the field, reparameterization trick in variational autoencoders enables the training with continuous latent variables by allowing efficient backpropagation through the network and enables the calculation of gradients with respect to the parameters of the variational encoder. As known, VAEs sample from a random node $z$ that is approximated by the parametric model $q(z|x)$ of true posteriority. The backpropagation cannot go through a random node. Introducing a parameter $\varepsilon$ in the backpropagation trick allows reparameterization of $z$ as well as the backpropagation to pass through deterministic nodes.

Optionally, the loss, denoted by $\mathcal{L}$, may be of the form

$$\mathcal{L} = \delta \mathcal{L}_{\text{rec}} - \frac{\beta}{2} \sum_{i=1}^{L} (1 + \log \sigma_i^2 - \mu_i^2 - \sigma_i^2) + \gamma TC \qquad (1)$$

where $\mathcal{L}_{\text{rec}}$ is the first term being of the form,

$$\mathcal{L}_{\text{rec}} = \left( \sum_{m=1}^{M} \| y_m - \hat{y}_m \|^2 \right)$$

where $\tau$ is a length of the input signal, $y_m$ is the output of the m-th label of the decoder, and $\hat{y}_m$ at the time $t$ is the predicted power of an appliance m and $\delta$ is weight respective to the first term. Over a batch, this is calculated on all the points of the sequence. In addition, $\mu_i$ and $\sigma_i$ are respectively, a mean and a standard deviation of the variational autoencoder. Here $\beta$ is a weight respective to the second term. In such examples, *TC* may be of the type discussed above weighted by a respective weight $\gamma$ for the third term. An algorithm, i.e., Algorithm 1, of the method according to such examples is showed below.

---

**Algorithm 1** Training TAB-VAE with Mutual Information constraints

---

**Require:** Observations $(x^{(i)})_{i=1}^{N}$, $(y^{(i)})_{i=1}^{M}$, batch size $B$, $\gamma$, $\beta$, $\delta$, Adam optimizer, maximum latent space size $L \times d$ (we suppose here $d = 1$), initialisation of parameters $\theta_k, \phi_k$ of encoders $f_{\theta_k}$ and decoders $f_{\phi_k}$.

**while** Objective function $\mathcal{L}(\theta_1)$ not converged **do**

 Select batch $(x^{(i)})_{i \in \mathcal{B}}$ of size $B$

 Sample $z_{\theta_{k,1}}^{(i)}, z_{\theta_{k,2}}^{(i)} \sim q_{\phi_k}(z|x^{(i)})$ for all $i \in \mathcal{B}$ where $z^{(i)} \in \mathbb{R}^d$

 $z_m(\theta_k) \leftarrow z_m(\theta_{k-1}) \oplus z_{\theta_{k,1}}^{(i)}$ *(expand $z_m$, to include $\{1, \ldots, k\}$)*

 $z_{\xi}(\theta_k) \leftarrow z_{\theta_{k,2}}^{(i)}, \xi_k \leq \xi_{k-1}$, *where* $\xi_k = f_{\theta_k}(z_{\theta_{k,2}}^{(i)})$ *and* $\xi_{k-1} = f_{\theta_{k-1}}(z_{\theta_{k-1,2}}^{(i)})$

 $z_k \leftarrow z_m(\theta_k) \oplus z_{\xi}(\theta_k)$ where $z_L \in \mathbb{R}^{(k+1) \times d}$

 $\mathcal{L}(\theta_k) \leftarrow \mathcal{L}(\gamma, \beta, \delta; \theta_k)$ using Eq. (1)

 Compute gradient $\nabla_{\theta,\phi} \mathcal{L}(\theta_k)$

**end while**

---

As seen, Algorithm 1 computes the loss based on the Equation (1) above and then it computes the gradient of the said loss. The method may compute the gradient in Algorithm 1 by any known method in the art. Algorithm 1 may be additionally optimized using an optimization according to Adam. Such an optimization may use a learning rate between 0.001 and 0.01, more preferably between 0.002 and 0.005. In some preferred examples, said learning rate may be 0.004. The method may determine a preferred value or a preferred range of values for the learning rate parameter following a grid search (as known in the field of machine learning) of this parameter on the training data. The method may adapt the value of the learning rate during the training according to the convergence of the training. In examples, the learning rate may be decreased if the convergence is not ensured. In such examples, the method may decrease an initial value of the learning rate (e.g., the preferred value of the learning rate) by a factor between 10 and 30 precent, preferably 20%.

Optionally, the loss may further comprise an orthogonality loss term. The orthogonality loss term may be configured to enforce an orthogonality between a first set of latent variables and a second set of latent variables. Each of the first set and the second set of latent variables corresponds to a signal of the plurality of signals. In such examples, the method may perform the training of the network in a cascade pattern of multi-step models by increasing the number of the latent variables at each step. Specifically, the method may apply the orthogonality loss term to penalize non-orthogonality of each set of latent variables (i.e., the latent variables for $z_k$ to $z_{k-1}$). The orthogonality loss term, denoted as $\mathcal{L}_{\text{ortho}}$, may be of the type

$$\mathcal{L}_{\text{ortho}} = \sum_{i=1}^{L} \sum_{j=i+1}^{L} \frac{\langle z_i, z_j \rangle^2}{|z_i|^2 |z_j|^2}$$

where $z_i$ is the first set of latent variable respective to output signal i of the neural network and $z_j$ is the second set of latent variables respective to output signal $j$ of the neural network and $L$ is the dimensionality of the latent space. The notation $\langle\cdot,\cdot\rangle$ representing a dot product between two vectors, and the notation $|\cdot|$ represents an Euclidean norm of a vector. The dimensionality $L$, may be set to 16. In examples, the orthogonality loss term may be added to the loss $\mathcal{L}$ (of Equation (1)) ) discussed above upon a respective weighting.

Imposing the exact orthogonality among the set of latent variables is computationally costly. Thereby, the method improves such an orthogonality computation by adding the orthogonality loss term as a discriminator (which discriminates non-orthogonal latent variables). The application of the orthogonality constraint by itself improves the independence of each set of latent variables, thereby interpretability of the result is improved. In other words, each vector of the latent space is associated to a signal of an appliance (the characteristics of such appliance m are encoded in $z_m$. This conducts to interpret how the network has picked up the properties of each appliance.

An algorithm of the method according to such examples with orthogonality loss term is presented below:

---

**Algorithm 2** Training TAB-VAE with orthogonality constraints

---

**Require:** Observations $(x^{(i)})_{i=1}^{N}$, $(y^{(i)})_{i=1}^{M}$, batch size $B$, $\gamma$, $\beta$, $\delta$, $\alpha$, Adam optimizer, maximum latent space size $L \times d$ (we suppose here $d = 1$), initialisation of parameters $\theta_k$, $\phi_k$ of encoders $f_{\theta_k}$ and decoders $f_{\phi_k}$.

**while** Objective function $\mathcal{L}(\theta_1)$ not converged **do**

    Select batch $(x^{(i)})_{i\in\mathcal{B}}$ of size $B$

    Sample $z_{\theta_{1,1}}^{(i)}, z_{\theta_{1,2}}^{(i)} \sim q_{\phi_k}(z_1|x^{(i)})$ for all $i \in \mathcal{B}$

    $z_m(\theta_k) \leftarrow z_{\theta_{1,1}}^{(i)}$, *First latent space of the machine $m = 1$ (i.e. reconstruction of $y_1$)*

    $z_\xi(\theta_k) \leftarrow z_{\theta_{1,2}}^{(i)}$

    $z_1 \leftarrow z_m(\theta_1) \oplus z_\xi(\theta_1)$ where $z_1 \in \mathbb{R}^{(2)\times d}$

    $\mathcal{L}(\theta_1) \leftarrow \mathcal{L}(\gamma, \beta, \delta; \theta_k)$ using Eq. (11)

    Compute gradient $\nabla_{\theta,\phi}\mathcal{L}(\theta_k)$

**end while**

**for** $k = 2$ to $(L-1)$ **do**

    **while** $\theta_k$ not converged **do**

        Select batch $(x^{(i)})_{i\in\mathcal{B}}$ of size $B$

        Sample $z_{\theta_{k,1}}^{(i)}, z_{\theta_{k,2}}^{(i)} \sim q_{\phi_k}(z_k|x^{(i)})$ for all $i \in \mathcal{B}$ where $z^{(i)} \in \mathbb{R}^d$

        $z_m(\theta_k) \leftarrow z_m(\theta_{k-1}) \oplus z_{\theta_{k,1}}^{(i)}$ *(expand $z_m$, to include $\{1,\ldots,k\}$)*

        $z_\xi(\theta_k) \leftarrow z_{\theta_{k,2}}^{(i)}, \xi_k \leq \xi_{k-1}$, *where $\xi_k = f_{\theta_k}(z_{\theta_{k,2}}^{(i)})$ and $\xi_{k-1} = f_{\theta_{k-1}}(z_{\theta_{k-1,2}}^{(i)})$*

        $z_k \leftarrow z_m(\theta_k) \oplus z_\xi(\theta_k)$ where $z_k \in \mathbb{R}^{(k+1)\times d}$

        $\mathcal{L}(\theta_k) \leftarrow \mathcal{L}(\gamma, \beta, \delta; \theta_k) + \alpha.\mathcal{L}_\perp$ using    Eq. (1)

        Compute gradient $\nabla_{\theta,\phi}\mathcal{L}(\theta_k)$

    **end while**

**end for**

---

As seen, Algorithm 2 comprises an attention gate at the layer just before the latent space sampling of the variational auto-encoder.

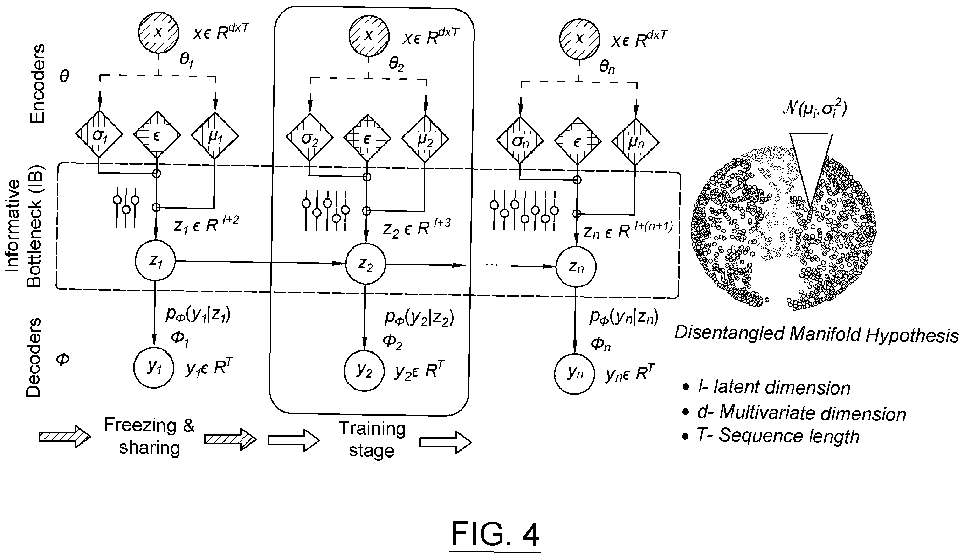

FIG. 4 presents an overview flowchart of the learning process when training is a multi-stage model according to Algorithm 2 presented above. In such a multi-stage model, the latent variable is constrained to be fully independent through an orthogonality term $\mathcal{L}_{ortho}$ which is denoted as $\mathcal{L}_\perp$ in Algorithm 2. Furthermore, in said algorithm, a is the respective weight of the orthogonality loss term.

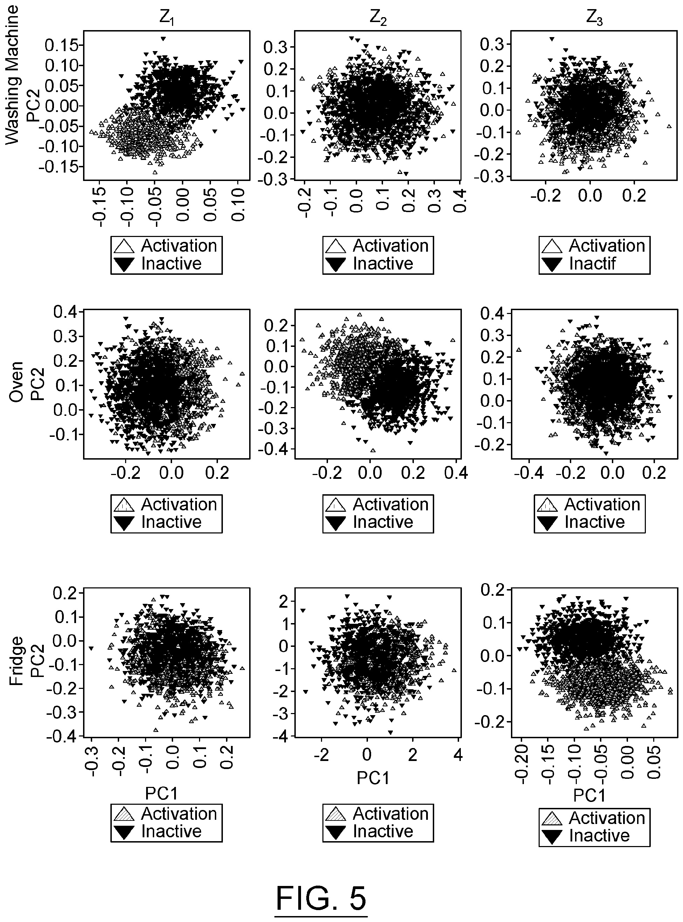

FIG. 5 presents examples results obtained by such orthogonalization. Each row corresponds to data where at most one piece of equipment (Washing Machine (MaL) Oven and Refrigerator from top to bottom) is active. Each column represents the component $z_m^{(t)}$ of the latent variable $z^{(t)}$ structured during training to correspond to the activation of equipment m. Only the first two components of principal component analysis (PCA) of $z_m^{(t)}$ are presented with different grey scale level depending on whether the equipment is activated or not in the considered sample. The diagonal plots show that $z_m^{(t)}$ is structured according to the activation of equipment $m$.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g., one for the program, and possibly one for the database).

FIG. 3 shows an example of the system, wherein the system is a client computer system, *e.g.*, a workstation of a user.

The client computer of the example comprises a central processing unit (CPU) 1010 connected to an internal communication BUS 1000, a random-access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages access to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, especially designed ASICs (application-specific integrated circuits). A network adapter 1050 manages access to a network 1060. The client computer may also include a haptic device 1090 such as cursor control device, a keyboard, or the like. A cursor control device is used in the client computer to permit the user to selectively position a cursor at any desired location on display 1080. In addition, the cursor control device allows the user to select various commands, and input control signals. The cursor control device includes several signal generation devices for inputting control signals to a system. Typically, a cursor control device may be a mouse, the button of the mouse being used to generate the signals. Alternatively, or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment. Implementations of the method are now discussed.

The implementations are related to disaggregating complex sequential data in energy disaggregation. As a technique to promote energy conservation, energy disaggregation enables homeowners to gain comprehensive insights into their energy usage. Implementations provides a solution which is robust and generalizable to any household with an enhanced interpretability to gain a deeper understanding of energy consumption behavior. The implementations leverage a temporal attention bottleneck mechanism to learn a disentangled manifold representation. The implementations thereby provide an improved disaggregation results and obtain an informative representation at the manifold level by enforcing temporal dependency at the bottleneck and preserving a factor relaying devices using a Temporal Attention Bottleneck (TAB).

The implementations provide a TAB based on VAE, which aims to disaggregate energy from an aggregate profile and improve the generalization of the generative model to avoid having to deal with different brands of devices. This comes from the manner in which temporal attention gates both operate bottom-up and top-down sharing, since sampling takes place after an attention layer (which handles all the temporal attributes of the previews times steps), resulting a bottleneck that is more informative. The implementations disentangle the latent variables of the generative model to improve the interpretability for energy disaggregation. The implementations can traverse the latent space and assign any specific point in the distribution to either an activated state of the device or noise.

The objective of the implementations is to accurately identify and separate the sub-components of a given power sequence $X$ that correspond to different appliances. If $f_\phi$ denotes the encoder network and $f_\theta$ denotes the decoder network, z is a sampling of the latent code from $f_\phi(x)$, where $f_\theta$ attempts to reconstruct $\hat{X} = f_\theta(z)$. In the context of Energy Disaggregation, the implementations express $\hat{X}$ as the sum of appliance usage at time $t$ and noise, i.e.,

$$\hat{X} = \sum_{m=1}^{M} \hat{y}_m(t) + \hat{\xi}(t).$$

The implementations assume that z at the high level can be represented as factorized into two groups as $z = z_\xi \oplus z_m$. Here, $z_m \in \mathbb{R}^{(L-1)\times d} \in R(L-1)\times d$ represents the latent code of appliances, while $z_\xi \in \mathbb{R}^{1\times d}$ represents the latent code of noise $\xi$. The reason for considering the multi-dimensional case is that some factors of an appliance cannot be adequately represented by a single dimension.

The implementations, in a manner similar to an inverse Generalized Additive Model (GAM), decompose the input $X$ into multiple $y_m$ and noise. Specifically, in the context of Energy Disaggregation, the task of decomposing $X$ can be framed as learning a decoder network $f_\theta$ that satisfies the causality constraint, with the objective of estimating the power consumption of individual appliances from the aggregated signal $X$. The approach of the implementation aims to impose two properties on the manifold $z \in \mathbb{R}^{L\times d}$ : one is related to the noise, denoted by $z_\xi \in \mathbb{R}^{1\times d}$ , and the other to the latent variables used for constructing the appliance labels, denoted by $zz_m \in \mathbb{R}^{(L-1)\times d}$. The latent variables capture the information required to construct a specific appliance, while the noise variable contains the information required to construct the residual power $\hat{\xi}(t)$. between $\{y_m\}_{m=1}^{M}$ and $X$.

Delaying with a time series, the implementations assume a strong correlation between the latent code for both $z(t) = z_\xi(t) \oplus z_m(t)$ and $z(t+1) = z_\xi(t+1) \oplus z_m(t+1)$ of $X(t)$ and $X(t+1)$ respectively. The assumption is that in a sequential data context, an event that occurs at the end of one sequence X(t) would likely appear at the beginning of the subsequent sequence $X(t+1)$. To maintain the sequential nature of the information captured from the data $X(t)$, a Temporal Attention Bottleneck with Residual connections to the manifold is introduced in the network. This bottleneck serves as a filter, allowing only relevant information to pass through to the latent space, thereby ensuring that the information captured in the latent space is both informative and relevant to the task at hand.

The technical details of the encoders $f_\phi$ and decoders $f_\theta$ are presented in Table 1. Here T denotes the input sequence length and Feat the number of features.

Table 1 : Encoder and Decoder architecture of TAB-VAE for Energy Disaggregation, $T$ denote the input sequence length and Feat the number of features.

| Encoder | | | Decoder | | |
|---|---|---|---|---|---|
| Layer | output Shape | #of Parameters | Layer | Output Shape | #of Parameters |
| Input | $(T, Feat)$ | 0 | Input | $(N,)$ | 0 |
| Reshape | $(T, Feat, 1)$ | 0 | Dense-512,ReLU | $(512,)$ | 33.792 |
| Conv1D-32,ReLU | $(T, Feat, 32)$ | 320 | Dense-64*F,ReLU | $(64,F)$ | 32.832 |
| ConvID-64,ReLU | $(T, Feat, 64)$ | 6.208 | Reshape | $(T, Feat, 64)$ | 0 |
| Flatten | $(T \times Feat \times 64)$ | $\beta$ | ConvIDTranspose-64,ReLU | $(T, Feat, 64)$ | 12.352 |
| Dense-512,ReLU | $(512,)$ | 33.228 | ConvIDTranspose-32,ReLU | $(T, Feat, 32)$ | 6.176 |
| Dense-2$N$ | $(2N.)$ | 1.026 | ConvIDTranspose-F, tanh | $(T, Feat, 1)$ | $F + 33$ |

Experiment design

Now the performance of the proposed model against the most recent state-of-the-art method is being investigated. To do that, an experiment to measure the power consumption detection and reconstruction capabilities of the devices is designed.

*Datasets and Metrics*

Experiments on two publicly available datasets were conducted, namely REDD (as can be found in J. Z. Kolter and M. J. Johnson. Redd: A public data set for energy disaggregation research. In Workshop on data mining applications in sustainability (SIGKDD), San Diego, CA, volume 25, pages 59-62, 2011), UK-DALE (as can be found in J. Kelly and W. Knottenbelt. The UK-DALE dataset, domestic appliance-level electricity demand and whole-house demand from five UK homes. Scientific data, 2(1):1-14, 2015.) and REFIT (as can be found in S. Firth et al. REFIT smart home dataset. 2015.), which consists of power consumption data from several machines.

The UK-DALE dataset consists of five houses with varying numbers of sub-metered appliances and includes both aggregate and individual appliance-level power measurements sampled at 1/6Hz. The experiments of the implementations are focused on five specific appliances, including three On/Off appliances (refrigerator, kettle, and microwave) and two multi-state appliances (washing machine and dishwasher) that are present in houses 1, 2, and 5. Houses 3 and 4 has not been considered in the experiments due to their limited number of appliances.

The REFIT dataset consists of 20 houses, with an average of nine sub-metered appliances per house, and includes both aggregate and sub-metered power measurements sampled at 1/8 Hz. The same five appliances from the UK-DALE dataset are selected for analysis in the REFIT scenario. During data preprocessing, detected missing data in the aggregate and sub-metered readings are removed if the missing data persists for longer than five minutes. The missing data of a few seconds to five minutes are retained, as they could be considered as noise or small data losses resulting from communication issues during deployment.

*Baseline*

In the experiments, the implementations are compared to the following state-of-the-art multivariate time series baselines. All baselines' methods are adopted to the Disaggregation pipeline. The experiments provide a full comparison with previous state-of-the-art generative models, including Vanilla VAE, β-TCVAE, and NVAE. Each model is trained using its original settings and further adapted for time series. The time series data for β-TCVAE and VAE are preprocessed by mapping the original data into a tensor with a fixed dimensionality. For NVAE, the original settings and a Gaussian distribution as the prior were used.

- Sequence-to-Sequence (S2S). Encoder-decoder with RNNs architecture is used to disaggregate sequence to a sequence.
- S2P using DeepAR. Sequence to Point (S2P) task involves predicting only one point, usually the midpoint of the sequence $\tau$. However, predicting the next point ($\tau + 1$) in a rolling sequence based on sequence $\tau$ yields lower performance. Some modifications were made to the DeepAR model to enable its use in the disaggregation process. DeepAR can handle multiple related time series and automatically extract seasonal patterns and long-term trends. For DeepAR see https://github.com/arrigonialberto86/deepar
- D$^3$VAE: Diffusion-VAE combining a VAE and a diffusion model for forecasting, we adapt this structure to disaggregation task. See (https://arxiv.org/abs/2301.03028)

Implementation details and settings

The model, according to the implementations, utilizes a bidirectional encoder like that of the NVAE framework according to Document A. Vahdat and J. Kautz. NVAE: A deep hierarchical variational autoencoder. In H. Larochelle, M. Ranzato, R. Hadsell, M. Balcan, and H. Lin, editors, Advances in Neural Information Processing Systems, volume 33, pages 19667-19679. Curran Associates, Inc., 2020. Such a NVAE framework processes input data in a hierarchical fashion to process input data and to produce a low-resolution latent code that is refined by a series of upsampling layers. The initial step involves a coarse-grained encoder that produces a low-resolution latent code. Subsequently, the low-resolution code is refined by a series of upsampling layers in a refinement network, which incrementally increases its resolution. At each stage of the refinement process, a bidirectional VAE is utilized to encode the current level of the code and generate a higher-resolution code for the subsequent stage. While the NVAE framework has shown success in image generation tasks, its scalability for time series data is yet to be explored. The experiments compare the performance of the implementations with those of the conventional bidirectional autoencoder, for example the one according to the document I. Higgins, L. Matthey, A. Pal, C. Burgess, X. Glorot, M. Botvinick, S. Mohamed, and A. Lerchner.beta-VAE: Learning basic visual concepts with a constrained variational framework. International Conference on Learning Representations, 2017.

The experiments use the Adam optimizer (according to Document D. P. Kingma and J. Ba. Adam: A method for stochastic optimization. arXiv preprint arXiv:1412.6980, 2014.) for training, with an initial learning rate of $10^{-3}$ and cosine learning rate decay. To further ensure the stability of the training, we reduce the learning rate to $7 \times 10^{-4}$ for all experiments. Early stopping is applied during training with a patience of 5 epochs.

Selecting the appropriate window time series for Non-Intrusive Load Monitoring (NILM) involves choosing a time interval for analyzing the energy consumption data that allows for the detection and classification of individual appliance activities. This window should be long enough to capture a complete appliance activity cycle but short enough to avoid overlapping with other appliance activities or capturing periods of inactivity. The ideal window size depends on the on factors such as the sampling rate of the energy meter, the number and types of appliances being monitored, and the specific algorithm used for NILM. The implementation may set the window size to have at least half the maximum consumption size of an appliance machine. In other words, in such cases, said appliance has a duration of usage at least 50% of the size of the latent space. After setting the window size, the implementations may vary said size slightly, for example in an interval +/- 10% (i.e., in an interval of ten percent increase and decrease) and perform a grid search in said interval to find out which one is the most optimal for all the appliances.

Experimental Results

*Overall comparison*

Table 2 presents the results of the experiments in which several methods (i.e., DAE, S2S, S2P, D³VAE, and TAB-VAE) are evaluated for their performance on different appliances in a home energy monitoring system. The performance is evaluated using several metrics, including precision, recall, F1-score, and mean absolute error (MAE), and on different dataset, including on UK-DALE, REDD, and REFIT datasets,

In Table 2, the notation"-" denotes the unknown result due to the high complexity of the corresponding method. F1 score (higher is better as noted by the upward arrow), MAE, and MSE (lower is better as noted by the downward arrow) are computed on the test set. For each model, the best configuration is the one achieving the lowest MSE on the validation set.

Table 2 :Results of the disaggregation models tested on UK-DALE dataset and are presented from left to right. The models included in the comparison are S2P based on Deep AR, DAE, S2S, D³VAE, and TAB-VAE.

| Dataset | Method | Metric | Fridge | Clothes dryer | Stove | Washing Machine | Dishwasher | Oven |
|---------|--------|--------|--------|---------------|-------|-----------------|------------|------|
| **UK-DALE** | DAE | F1 (↑) | 80.57 | 81.37 | 81.47 | 83.01 | 81.41 | 81.80 |
| | S2S | | 83.99 | 86.08 | 83.79 | 84.85 | 83.28 | 83.61 |
| | S2P | | 83.73 | 86.12 | 83.23 | 84.56 | 83.28 | 83.63 |
| | D³VAE | | **91.71** | 92.14 | 92.30 | 91.63 | **92.32** | 93.11 |
| | **TAB-VAE** | | 91.81 | **93.26** | **92.99** | **92.67** | 92.21 | **93.77** |
| | DAE | MAE (↓) | 25.74 | 25.63 | 24.32 | 25.22 | 24.81 | 25.46 |
| | S2S | | 26.70 | 24.72 | 30.05 | 25.56 | 24.49 | 23.98 |
| | S2P | | 27.36 | 28.92 | 27.37 | 27.86 | 25.00 | 25.28 |
| | D³VAE | | 22.58 | 21.02 | 21.73 | 20.46 | 20.35 | 19.74 |
| | **TAB-VAE** | | **19.55** | **18.33** | **18.63** | **19.19** | **17.49** | **19.30** |
| | DAE | MSE (↓) | 243.52 | 244.08 | 245.74 | 244.07 | 243.70 | 243.18 |
| | S2S | | - | - | - | - | - | - |
| | S2P | | - | - | - | - | - | - |
| | D³VAE | | 163.01 | 162.80 | 162.58 | 163.28 | 163.04 | 171.34 |
| | **TAB-VAE** | | **164.22** | **161.58** | **161.87** | **156.77** | **152.28** | **152.02** |

(continued)

| Dataset | Method | Metric | Fridge | Clothes dryer | Stove | Washing Machine | Dishwasher | Oven |
|---|---|---|---|---|---|---|---|---|
| | DAE | | 82.99 | 81.94 | 82.01 | 82.51 | 81.61 | 81.90 |
| | S2S | | 87.09 | 86.16 | 83.43 | 84.83 | 83.30 | 83.78 |
| | S2P | F1 (↑) | 86.96 | 85.57 | 83.52 | 85.08 | 83.97 | 84.14 |
| | D³VAE | | 93.23 | 92.29 | 91.53 | 91.54 | **92.69** | 92.30 |
| | **TAB-VAE** | | **94.25** | **93.07** | **93.33** | **92.90** | 92.82 | **94.04** |
| | **DAE** | | **26.56** | **25.34** | **24.70** | **24.99** | **25.30** | **25.42** |
| | S2S | | 26.56 | 24.78 | 29.78 | 25.78 | 24.04 | 23.94 |
| REDD | S2P | MAE (↓) | 30.68 | 28.40 | 27.65 | 27.43 | 24.24 | 25.04 |
| | D³VAE | | 22.74 | 21.35 | 21.74 | 19.85 | 20.56 | 19.99 |
| | **TAB-VAE** | | **19.48** | **18.33** | **19.16** | **18.75** | **17.25** | **19.55** |
| | DAE | | 243.53 | 244.73 | 245.34 | 244.62 | 243.74 | 243.91 |
| | S2S | | - | - | - | - | - | - |
| | S2P | MSE (↓) | - | - | - | - | - | - |
| | D³VAE | | **163.61** | 162.88 | 162.81 | 163.24 | 162.32 | 170.97 |
| | **TAB-VAE** | | 163.63 | **161.78** | **162.06** | **157.19** | **152.21** | **151.65** |
| | DAE | | 80.80 | 81.18 | 81.30 | 82.27 | 82.08 | 82.27 |
| | S2S | | 83.76 | 85.45 | 83.77 | 84.49 | 83.75 | 84.35 |
| | S2P | F1 (↑) | 83.64 | 85.37 | 83.67 | 84.70 | 83.54 | 84.07 |
| | D³VAE | | **91.46** | 92.06 | 92.07 | 92.00 | **93.13** | 93.11 |
| | **TAB-VAE** | | 92.17 | **93.15** | **92.89** | **92.82** | 92.64 | **94.04** |
| | DAE | | 25.40 | 25.11 | 23.85 | 24.84 | 25.20 | 25.59 |
| | S2S | | 27.34 | 24.84 | 29.50 | 26.05 | 24.26 | 24.20 |
| **REFIT** | S2P | MAE (↓) | 26.98 | 28.36 | 27.23 | 27.80 | 24.87 | 25.19 |
| | D³VAE | | 21.88 | 20.96 | 22.17 | 19.72 | 19.76 | 19.75 |
| | **TAB-VAE** | | **18.81** | **18.83** | **19.47** | **19.05** | **17.13** | **19.15** |
| | DAE | | 243.67 | 244.17 | 245.34 | 244.51 | 243.41 | 243.71 |
| | S2S | | - | - | - | - | - | - |
| | S2P | MSE (↓) | - | - | - | - | - | - |
| | D³VAE | | **163.57** | **163.08** | **162.12** | 163.19 | 162.48 | 170.85 |
| | **TAB-VAE** | | 163.85 | 161.74 | 162.57 | **156.66** | **151.71** | **151.76** |

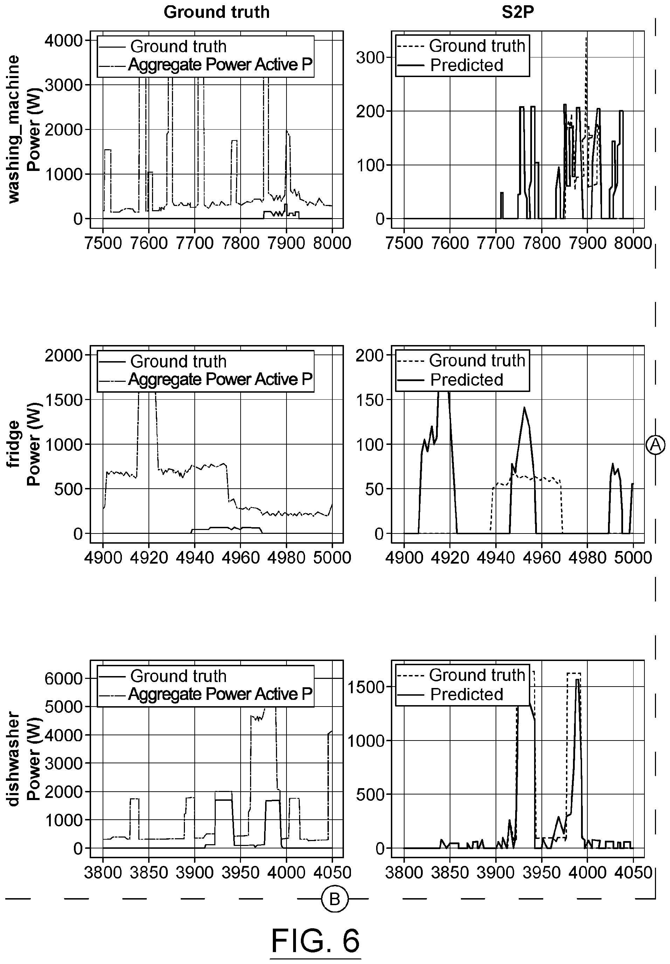

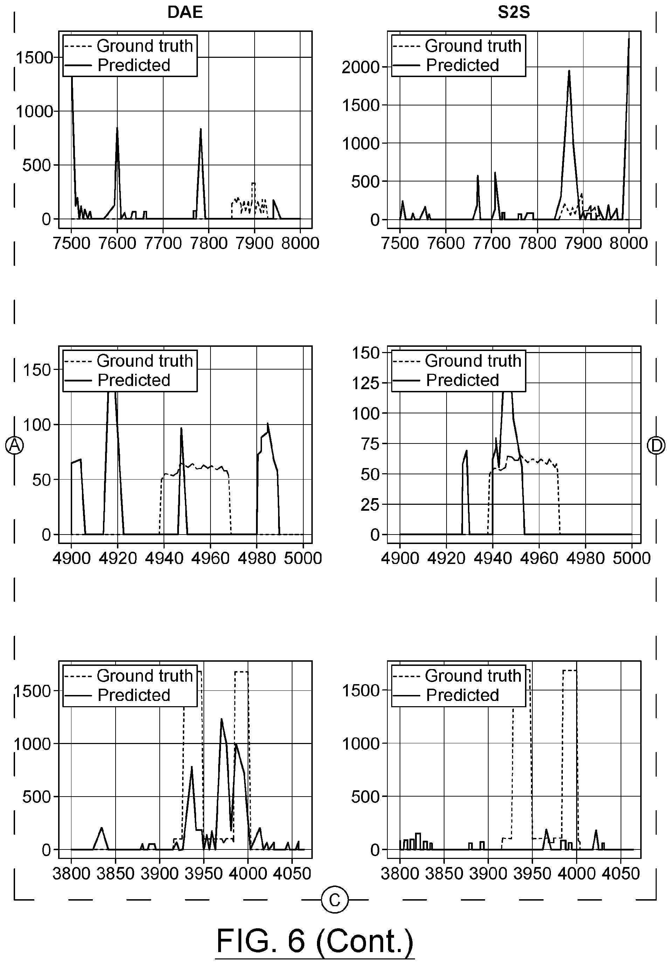

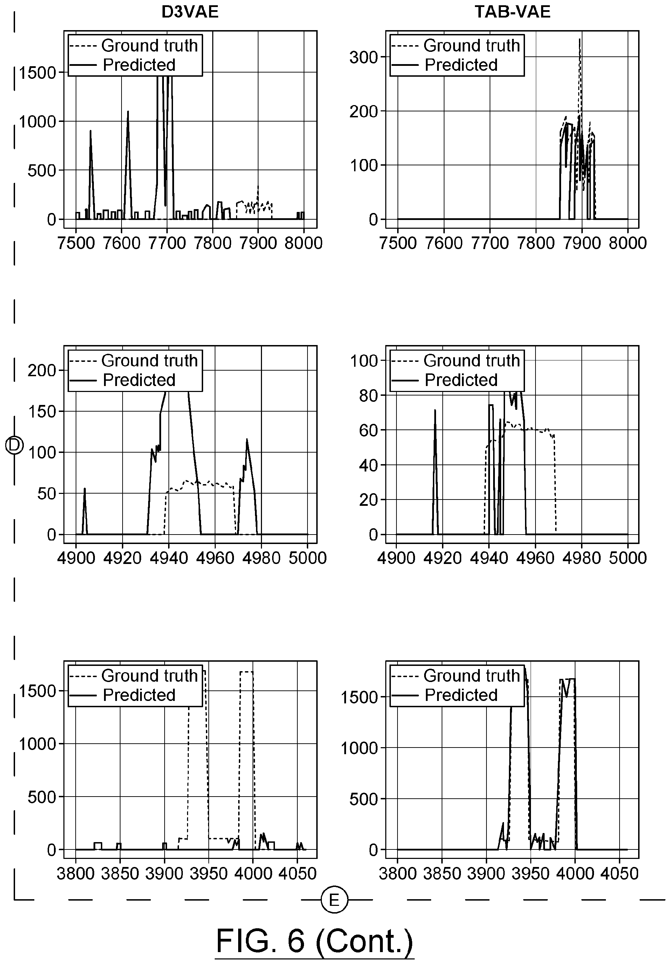

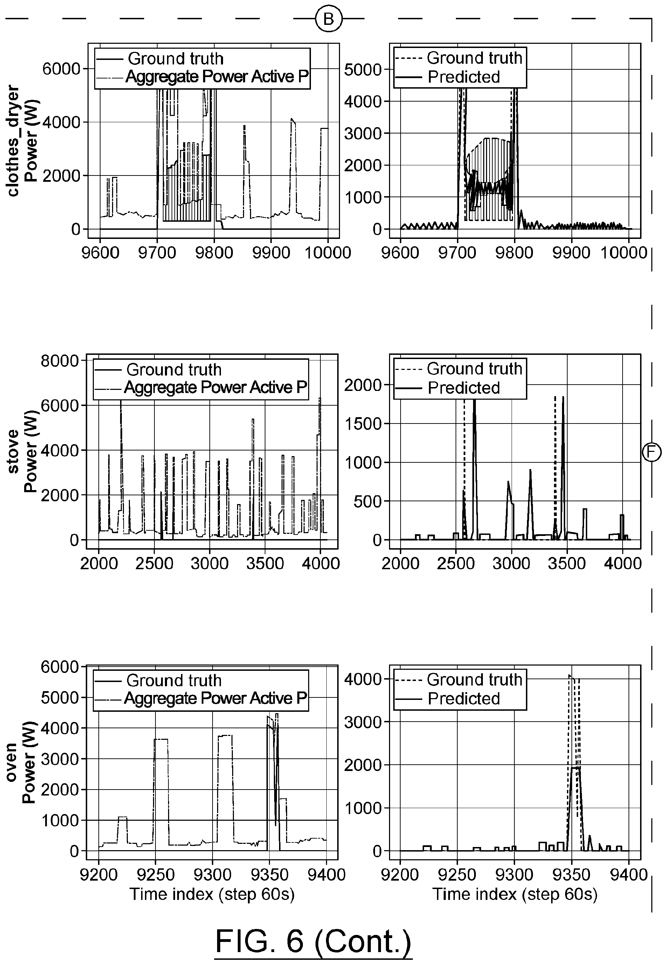

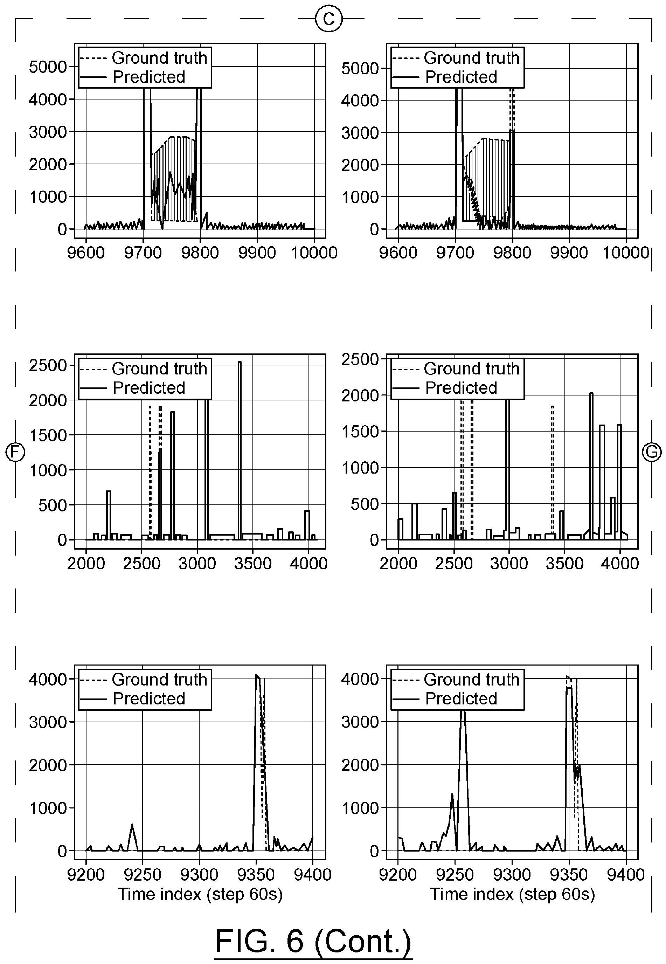

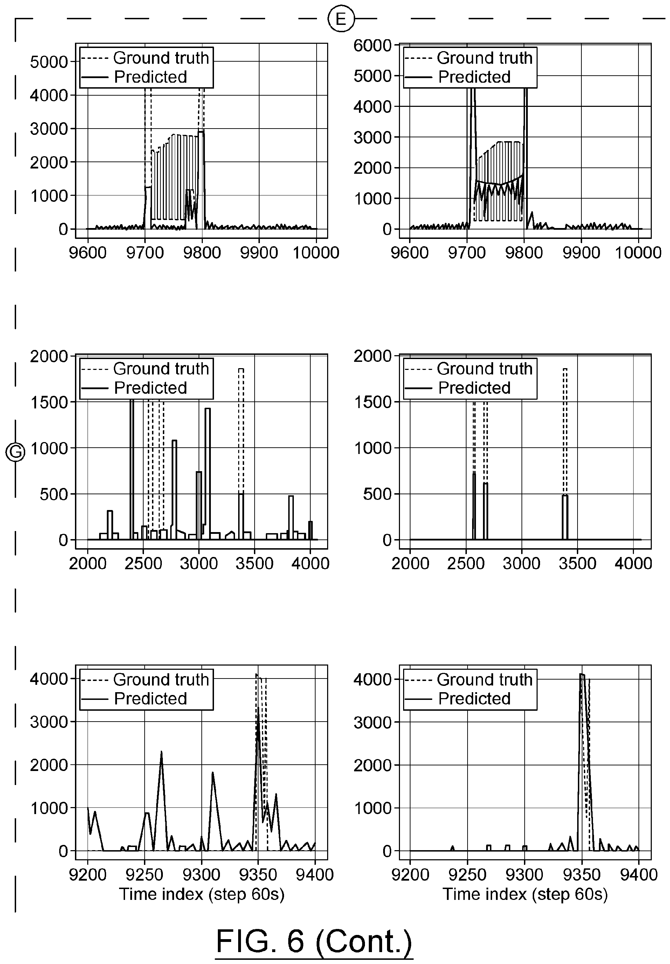

FIG. 6 presents the results of the disaggregation models tested on UK-DALE dataset and are presented from left to right. The models included in the comparison are S2P based on Deep AR, DAE, S2S, D³VAE, and TAB-VAE. Each row corresponds to a different appliance, from top to bottom: washing machine, fridge, dishwasher, clothes dryer, stove, and oven.

Looking at the results, the TAB-VAE method (i.e., the method according to the implementations) performs consistently well across all appliances, while achieves the highest precision, recall, and F1-score for several appliances, including the Kettle, Washing Machine, and Dishwasher. The TAB-VAE also achieves the lowest MAE for most appliances, indicating that it can accurately predict the energy usage of these appliances.

Compared to other methods, the D³VAE also performs well on some appliances, but not as consistently as the TAB-VAE. The S2S and S2P methods generally perform well on the Microwave, but not on other appliances. The DAE method performs the worst overall, achieving the lowest scores for most metrics and appliances.

Overall, the results of TAB-VAE are powerful for preserving the recurrence of information in time series data and can be used to learn low-dimensional representations of the data that are informative for downstream tasks, such as predicting the future values in the time series.

Further experiments have been also conducted to investigate the scalability of the implementation across varying lengths of time series and amounts of available data. Specifically, we evaluated the model's performance on NILM datasets and reported the results in Table. (2). It has been observed that TAB-VAE predictive performance remains relatively stable across different settings. Additionally, when the amount of available data is reduced, TAB-VAE performs consistently.

_Disentanglement and Interpretation_

As discussed above, the implementations are designed to disaggregate the energy using TAB, which enforces temporal dependency at the bottleneck and preserving a factor relaying devices. Using a Temporal Attention Bottleneck (TAB), the implementations improve the disaggregation results and obtain an informative representation at the manifold level.

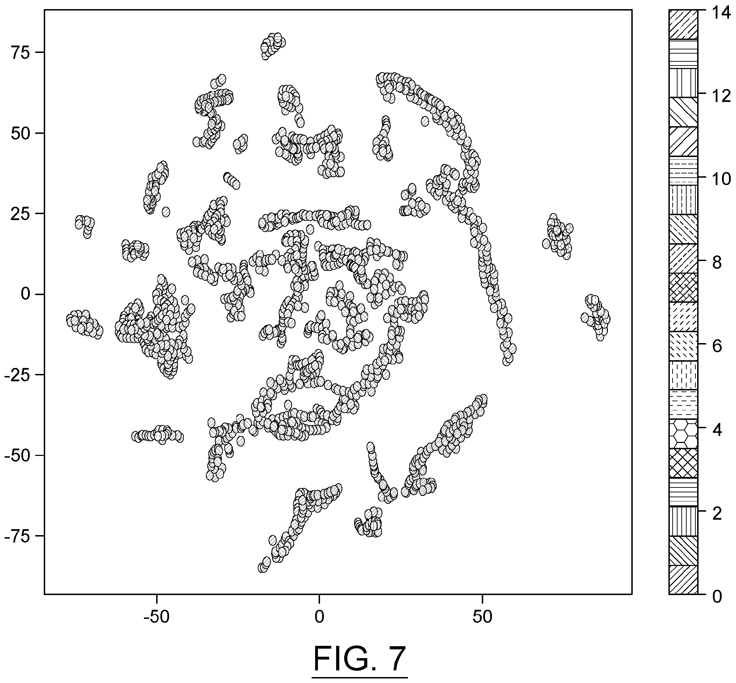

FIG.s 7 and 8 present an SNE visualization of the learned latent space z on UK-DALE dataset. FIG. 7 presents the ground truth labels of M available devices (i.e., stove, fridge, washing machine, oven, cloth dryer, dishwasher, electric vehicle).

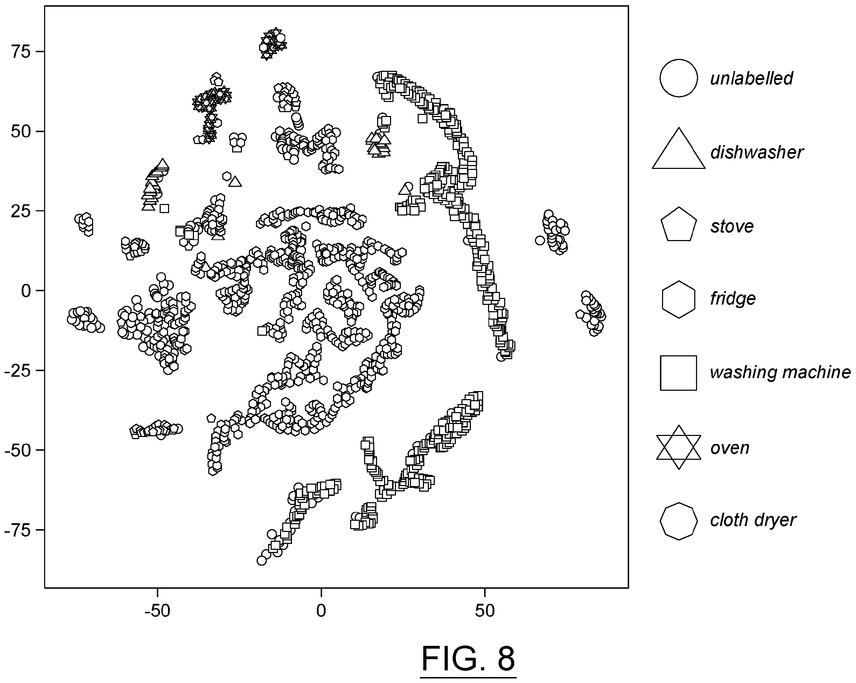

FIG. 8 presents the clustering discovered by the implementation at the latent space. Such a discovered clustering in latent space helps the understanding of how the model projects data into latent space. As seen in FIG. 8 there is an 'unlabeled' label. If a device is not used in each sequence, the implementations assign an unlabeled region is assigned to this sequence. The model can be properly interpreted. Specifically, if one generates from the latent space in any region, the signature produced is similar to the appliance activation.

**Claims**

1. A computer-implemented method of machine-learning for non-intrusive monitoring of energy consumption of households with respect to a plurality of appliance classes, the method comprising:

   - obtaining a bidirectional variational auto-encoder (VAE) architecture for a neural network, including a temporal attention layer, the neural network being configured to take as an input a signal representing an aggregate electrical load of a household over time, and to output a plurality of signals ($y_m$) each representing an electrical load of a respective appliance class over time; and
   - training the neural network.

2. The method of claim 1, wherein the temporal attention layer is configured to define a set of latent variables, the set of latent variables being defined by a conditional probability distribution (P(z I X)) conditioned on the input signal (X).

3. The method of claim 2, wherein the method obtains the latent variables by minimizing a Lagrangian, the Lagrangian being of a type:

$$\mathcal{L}_{IB}(p_\theta(z \mid X); \beta) = I(X; z) - \beta I(z; Y)$$

   where $p_\theta$(z | X) is a generative distribution from the prior distribution $p_\theta$ conditioned on a latent variable _z_, _I(X;z)_ is the mutual information between the input X and the latent variable _z_, $\beta I$(z; Y) is the mutual information between the latent variable z and the output _Y_, and $\beta$ is a Lagrange multiplier.

4. The method of any of claims 1 to 3, wherein the training comprises minimizing a loss, the loss comprising:

   - a first term representing a reconstruction loss between the input signal and the plurality of outputted signals,
   - a second term representing a likelihood estimation of a set of latent variables, and
   - a third term representing an amount of information shared among a set of latent variables of the neural network.

5. The method of claim 4, wherein the likelihood estimation of the second term includes a disparity between a prior Gaussian distribution and a distribution of the set of latent variables prior distribution.

**6.** The method of claim 5, wherein the loss is of the form

$$\mathcal{L} = -\frac{\beta}{2} \sum_{i=1}^{L} (1 + \log \sigma_i^2 - \mu_i^2 - \sigma_i^2) + \gamma TC + \delta \mathcal{L}_{\text{rec}}$$

where $\mathcal{L}_{\text{rec}}$ is the first term being of the form

$$\mathcal{L}_{\text{rec}} = \left( \sum_{m=1}^{M} \|y_m - \hat{y}_m\|^2 \right),$$

*TC* is of the form

$$TC(z) = \text{KL}\left( p(z) \, \| \, \prod_i p(z_i) \right)$$

where $p(z)$ is the joint distribution of the latent variable *z*, and $\Pi_i\, p(z_i)$ is the product of the marginal distributions of the components of *z*, and KL denotes a Kullback-Leibler divergence, $\mu_i$ is a mean of the variational autoencoder, $\sigma_i$ is a standard deviation of the variational autoencoder, and $\beta$, $\gamma$, $\delta$ are respective weights.

**7.** The method of any of claims 4 to 6, wherein the loss further comprises an orthogonality loss term enforcing an orthogonality between a first set of latent variables ($z_i$) and a second set of latent variables ($z_j$); each of the first set and the second set of latent variables corresponding to a signal of the plurality of signals.

**8.** The method of claim 5, wherein the orthogonality term ( $\mathcal{L}_{\text{ortho}}$ ) is of the type

$$\mathcal{L}_{\text{ortho}} = \sum_{i=1}^{L} \sum_{j=i+1}^{L} \frac{\langle z_i, z_j \rangle^2}{|z_i|^2 |z_j|^2}$$

where $z_i$ is the first set of latent variable respective to output signal *i* of the neural network and $z_j$ is the second set of latent variables respective to output signal *j* of the neural network, and *L* is the dimensionality of the latent space, the notation $\langle \cdot, \cdot \rangle$ representing a dot product between two vectors, and $|\cdot|$ representing a Euclidean norm of a vector.

**9.** A computer-implemented method for non-intrusive monitoring of energy consumption, the method comprising:

- obtaining an aggregated signal representing an electrical load of a plurality of appliances;
- obtaining a neural network trained according to any one of claims 1 to 8; and
- applying the obtained neural network to the aggregated signal thereby obtaining a plurality of signals each representing an electrical load of an appliance of the plurality of appliances.

**10.** The method of claim 9, wherein the obtained signal may be a sequence of powers and may comprise one or more of: an active power load, a reactive power load, and an apparent power load.

**11.** The method of any of claims 9 to 10, wherein the plurality of appliances comprises any one or any combination of: a washing machine, clothes dryer, oven, stove, refrigerator, dishwasher, and electric vehicle.

**12.** The method of any of claims 1 to 11, wherein the plurality of appliance classes has more than one class and fewer than 25 classes.

**13.** A computer program comprising instructions for performing the method according to any one of claims 1 to 12.

**14.** A computer readable storage medium having recorded thereon the computer program of claim 13.

**15.** A system comprising a processor coupled to a memory, the memory having recorded thereon the computer program of claim 13.

FIG. 1

EP 4 471 665 A1

FIG. 2

FIG. 3

EP 4 471 665 A1

FIG. 4

- l- latent dimension
- d- Multivariate dimension
- T- Sequence length

Disentangled Manifold Hypothesis

FIG. 5

FIG. 6

FIG. 6 (Cont.)

FIG. 6 (Cont.)

FIG. 6 (Cont.)

FIG. 6 (Cont.)

FIG. 6 (Cont.)

EP 4 471 665 A1

FIG. 7

EP 4 471 665 A1

Legend:

○ unlabelled

△ dishwasher

⬠ stove

⬡ fridge

□ washing machine

✡ oven

⬡ cloth dryer

FIG. 8

| | Europäisches Patentamt European Patent Office Office européen des brevets | **EUROPEAN SEARCH REPORT** | Application Number EP 23 30 5871 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | REGAN JACOB ET AL: "Deep attention and generative neural networks for nonintrusive load monitoring", THE ELECTRICITY JOURNAL, ELSEVIER, AMSTERDAM, NL, vol. 35, no. 5, 30 April 2022 (2022-04-30) , XP087091493, ISSN: 1040-6190, DOI: 10.1016/J.TEJ.2022.107127 [retrieved on 2022-04-30] * the whole document * | 1-15 | INV. G06N3/0455 G06N3/047 G06N3/0475 G06N3/088 G06N3/084 G01D4/00 |
| A,D | I. HIGGINSL. MATTHEYA. PALC. BURGESSX. GLOROTM. BOTVINICKS. MOHAMEDA. LERCHNER: "beta-VAE: Learning basic visual concepts with a constrained variational framework", INTERNATIONAL CONFERENCE ON LEARNING REPRESENTATIONS, 2017, XP055511799, * abstract * * 2 BETA-VAE FRAMEWORK DERIVATION * | 2-8 | |
| | | | **TECHNICAL FIELDS SEARCHED (IPC)** |
| A | SIROJAN T ET AL: "Deep Neural Network Based Energy Disaggregation", 2018 IEEE INTERNATIONAL CONFERENCE ON SMART ENERGY GRID ENGINEERING (SEGE), IEEE, 12 August 2018 (2018-08-12), pages 73-77, XP033423693, DOI: 10.1109/SEGE.2018.8499441 [retrieved on 2018-10-18] * abstract; figures 1-3 * | 1-15 | G06N |
| | -/-- | | |

The present search report has been drawn up for all claims

| Place of search | Date of completion of the search | Examiner |
|---|---|---|
| The Hague | 18 December 2023 | De Meyer, Arnaud |

EPO FORM 1503 03.82 (P04C01)

page 1 of 2

**EUROPEAN SEARCH REPORT**

Application Number

EP 23 30 5871

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VERONICA PICCIALLI ET AL: "Improving Non-Intrusive Load Disaggregation through an Attention-Based Deep Neural Network", ARXIV.ORG, CORNELL UNIVERSITY LIBRARY, 201 OLIN LIBRARY CORNELL UNIVERSITY ITHACA, NY 14853, 8 February 2021 (2021-02-08), XP081875379, DOI: 10.3390/EN14040847 * abstract; figures 2,3 * ----- | 1-15 | |

TECHNICAL FIELDS SEARCHED (IPC)

The present search report has been drawn up for all claims

| Place of search | Date of completion of the search | Examiner |
|---|---|---|
| The Hague | 18 December 2023 | De Meyer, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HART.** Nonintrusive appliance load monitoring. *Proceedings of the IEEE,* 1922, vol. 80 (12), 1870-1891
- **J. Z. KOLTER ; M. J. JOHNSON.** Redd: A public data set for energy disaggregation research. *In Workshop on data mining applications in sustainability (SIGKDD), San Diego, CA,* 2011, vol. 25, 59-62
- **J. KELLY ; W. KNOTTENBELT.** The UK-DALE dataset, domestic appliance-level electricity demand and whole-house demand from five UK homes. *Scientific data,* 2015, vol. 2 (1), 1-14
- **S. FIRTH et al.** *REFIT smart home dataset,* 2015

- NVAE: A deep hierarchical variational autoencoder. **A. VAHDAT ; J. KAUTZ.** Advances in Neural Information Processing Systems. Curran Associates, Inc, 2020, vol. 33, 19667-19679
- **I. HIGGINS ; L. MATTHEY ; A. PAL ; C. BURGESS ; X. GLOROT ; M. BOTVINICK ; S. MOHAMED ; A. LERCHNER.** beta-VAE: Learning basic visual concepts with a constrained variational framework. *International Conference on Learning Representations,* 2017
- **D. P. KINGMA ; J. BA. ADAM.** A method for stochastic optimization. *arXiv:1412.6980,* 2014